# EUROPEAN PATENT SPECIFICATION

(11) **EP 3 988 849 B1**
(45) Date of publication and mention of the grant of the patent: **25.09.2024**
(21) Application number: 21203265.0
(22) Date of filing: 18.10.2021
(51) Int. Cl.: F24F 8/108, F24F 8/80, A62B 7/10, A62B 18/00

(54) **PERSONAL VENTILATION DEVICE AND METHOD FOR DELIVERING SANITIZED AIR TO PERSONAL BREATHING SPACE**
PERSÖNLICHE LÜFTUNGSVORRICHTUNG UND VERFAHREN ZUR ZUFUHR VON KEIMFREIER LUFT AN EINEN PERSÖNLICHEN ATEMRAUM
DISPOSITIF ET PROCÉDÉ DE VENTILATION PERSONNELLE POUR FOURNIR DE L'AIR ASSAINI À UN ESPACE RESPIRATOIRE PERSONNEL

(30) Priority: 21.10.2020 US 202063094578 P; 20.09.2021 US 202117479127
(43) Date of publication of application: 27.04.2022
(73) Proprietor: The Boeing Company, Arlington, VA 22202 (US)
(72) Inventor: SPACE, David R., Chicago, 60606-1596 (US); FULLERTON, James A., Chicago, 60606-1596 (US); ARNAUD, Timothy J., Chicago, 60606-1596 (US); SHAW, Jon Burton, Chicago, 60606-1596 (US)
(74) Representative: Howson, Richard Giles Bentham

(56) References cited:
- KR-A- 20190 131 358
- US-A1- 2014 102 442
- US-A1- 2017 259 089

## Description

### FIELD OF THE INVENTION

Examples of the subject invention relate to personal, wearable ventilation devices and methods for delivering sanitized air to personal breathing spaces.

### BACKGROUND OF THE INVENTION

Vehicles such as commercial aircraft are used to transport passengers between various locations. Many commercial vehicles such as aircraft have High Efficiency Particulate Air (HEPA) filters in air conditioning systems that are able to entrap microbes and pathogens. The HEPA filters receive and sanitize air exiting the cabin or about to enter the cabin. HEPA filters and frequent cleaning of the cabin between flights are some methods to ensure the health of the passengers and crew onboard the aircraft.

Further, certain passengers may prefer to wear masks within an internal cabin of a vehicle, in an indoor space within a building, and/or at a densely populated outdoor space in order to reduce the risk of spreading pathogens. However, wearing masks for extended periods of time, such as during long flights, may be uncomfortable for certain passengers and may make conversation difficult.

KR20190131358 describes, in accordance with a machine translation of its abstract, an air cleaner which includes: a body having the shape of a neck band and including a flow path having a hollow inside to let air flow therein; an air inlet formed in a nape part of the body; air outlets formed at both ends of the body; at least one induction fan embedded inside the air inlet; at least one exhaust fan embedded inside the air outlet; and at least one filter placed on the induction fan and the exhaust fan. US2014102422 describes, in accordance with its abstract, a facial accessory system for prophylactic face protection. The system includes a facial accessory configured to be worn about the face of a user. The facial accessory include a channel disposed therethrough in fluid communication with an array of apertures orientated and positioned to generate a substantially continuous downwards curtain of airflow about a face of a user when air is forced therethrough. The system includes an airflow distribution device in fluid communication with the channel of the facial accessory. The airflow distribution device is configured to selectively force air to flow therethrough.

### SUMMARY OF THE DISCLOSURE

A need exists for a system and a method for preventing, minimizing, or otherwise reducing the spread of pathogens between passengers onboard a vehicle during a trip, such as between passengers in an internal cabin of an aircraft during a flight, without risking harm to the passengers.

With that need in mind, certain examples of the subject invention provide a personal ventilation device that includes a first duct segment and a second duct segment both held by a support structure that is configured to be mounted on a wearer of the personal ventilation device. The personal ventilation device also includes a first nozzle mounted to the first duct segment and a second nozzle mounted to the second duct segment. The first and second nozzles are configured to be disposed proximate to opposite sides of a face of the wearer and the first nozzle directs airflow from the first duct segment across the face of the wearer to form a control volume for a breathing space of the wearer.

The invention to which this European patent relates is defined in the appended claims.

### BRIEF DESCRIPTION OF THE DRAWINGS

Figure 1 illustrates a schematic diagram of an air distribution system according to an example of the subject invention.
Figure 2 is a perspective view of the ventilation device according to an example being worn by a person.
Figure 3 illustrates a front view of the ventilation device according another example.
Figure 4 illustrates a top-down view of the ventilation device shown in Figure 3.
Figure 5 is a top-down cross-sectional view of a ventilation device showing the
internal components according to a first example, however not configured for providing a unidirectional flow according to the invention.
Figure 6 is a top-down cross-sectional view of the ventilation device showing the
internal components according to a second example, however not configured for providing a unidirectional flow according to the invention.
Figure 7 is a top-down cross-sectional view of the ventilation device showing the
internal components according to a third example, however not configured for providing a unidirectional flow according to the invention.
Figure 8 is a top-down cross-sectional view of the ventilation device showing the internal components according to a fourth example, however not configured for providing a unidirectional flow according to the invention.
Figure 9 is a top-down cross-sectional view of the ventilation device configured for providing the unidirectional flow according to the invention and showing the internal components according to a fifth example.
Figure 10 is a top-down cross-sectional view of the ventilation device configured for providing the unidirectional flow according to the invention and showing the internal components according to a sixth example.
Figure 11 is a top-down cross-sectional view of the ventilation device configured for providing the unidirectional flow according to the invention and showing the internal components according to a seventh example.
Figure 12 is a side elevation view of the ventilation device according to another example being worn by a person.
Figure 13 is a perspective view of the ventilation device shown in Figure 12.
Figure 14 is a perspective view of a person wearing a vest that incorporates the ventilation device according to an example.
Figure 15 is a perspective view of the ventilation device according to another example being worn by a person.
Figure 16A illustrates fan modules of the ventilation device shown in Figure 15 mounted to a half facemask.
Figure 16B illustrates the fan modules of the ventilation device shown in Figure 15 mounted to a full facemask.
Figure 17A is a front elevation view of the ventilation device according to another example including an array of at least three fan modules.
Figure 17B is a top-down view of the ventilation device shown in Figure 17A.
Figure 18 illustrates a flow chart of a method for delivering sanitized air to a personal breathing space according to an example of the subject invention.

### DETAILED DESCRIPTION OF THE DISCLOSURE

The foregoing summary, as well as the following detailed description of certain examples will be better understood when read in conjunction with the appended drawings. As used herein, an element or step recited in the singular and preceded by the word "a" or "an" should be understood as not necessarily excluding the plural of the elements or steps. Further, references to "one example" are not intended to be interpreted as excluding the existence of additional examples that also incorporate the recited features. Moreover, unless explicitly stated to the contrary, examples "comprising" or "having" an element or a plurality of elements having a particular condition can include additional elements not having that condition.

Certain examples of the subject invention provide a personal ventilation device for reducing the spread of contaminants and/or pathogens (e.g., bacterial and/or viral microbes) via aerosols in the air. For example, the personal ventilation device is a wearable device that mounts to the wearer's head, neck, shoulders, chest, and/or upper back. The personal ventilation device operates by directing airflow across the face of the wearer in proximity to the wearer's nose and mouth, forming a control volume for the personal breathing space of the wearer. For example, the personal ventilation device may create an air "displacement" effect as the air is directed at and/or across the wearer's lower face. The air may be sanitized air that has passed through a filter, a UV light source, and/or the like to disinfect and/or treat the air prior to passing across the wearer's lower face. The personal ventilation device may function essentially as an open powered air-purifying respirator (PAPR) used to safeguard the wearer against contaminated air without covering the wearer's full face and/or head as typical PAPRs do. The airflow in the control volume may block aerosols that travel towards the wearer's breathing space, which is the space immediately in front of the wearer's nose and mouth from which air is inhaled. The aerosols may be blocked by being entrained in the airflow and/or forced to bypass the breathing space, such that the blocked aerosols are not inhaled or ingested by the wearer.

The personal ventilation device may be particularly useful for preventing the spread of pathogens directly from one person to another person before the air can be filtered through a cabin air conditioning system. For example, the control volume of the personal ventilation device may protect the wearer from aerosols emitted from a person to whom the wearer is holding a conversation, as well as from aerosols emitted from a nearby person who sneezed or coughed.

In addition to blocking external pathogens and contaminants, the ventilation device may supply sanitized air to the breathing space for inhalation by the wearer. For example, the ventilation device may include one or more air sanitizing components, such as a filter (e.g., HEPA filter), a UV light source, and/or the like to supply sanitized or decontaminated air into the breathing space.

According to one or more examples, the personal ventilation device may be mobile. For example, while wearing the ventilation device, the wearer may be untethered such that the wearer can ambulate or otherwise move about unhindered. Furthermore, the ventilation device may even be self-contained such that all components necessary to operate the device for providing the control air volume are integrated onboard the device without requiring connections to external components, such as air sources and power sources. For example, when the ventilation device is self-contained, the wearer can walk around (e.g., move about) while the ventilation device is in the "on" operating state, continuously forming the control volume to protect the breathing space of the wearer.

The ventilation device according to the examples described herein can be worn in vehicles, in buildings, and outdoors. At least one beneficial use application of the ventilation device is within commercial vehicles during trips, such as within internal cabins of aircraft, trains, buses, ferries and other marine vessels, and the like, where the wearer may be disposed relatively close to other people for an extended period of time. Another beneficial use application may be within theatres, concert halls, and other indoor high density environments. In at least one example, the ventilation device does not include a full mask or hood, and yet does not interfere with the wearer wearing a personal mask that covers the nose and mouth. For example, the wearer can wear both the mask and the ventilation device without added discomfort. Furthermore, the ventilation device in at least one example may be configured to accommodate and couple to a facemask to provide an integrated mask ventilation assembly.

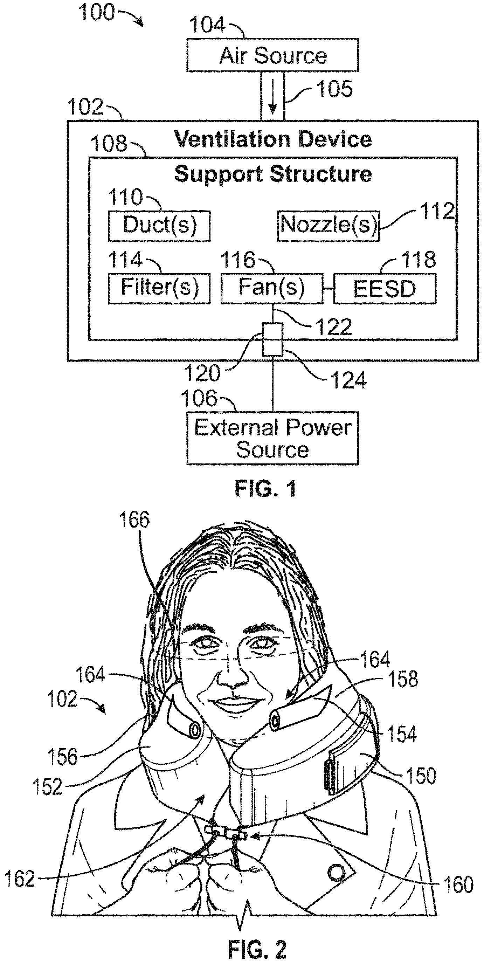

Figure 1 illustrates a schematic diagram of an air distribution system 100 according to an example of the subject invention.

The air distribution system 100 includes a personal ventilation device 102 (also referred to herein as ventilation device 102), an air source 104, and an external power source 106. The ventilation device 102 is a wearable article that can mount to a person's head, neck, shoulders, chest, and/or back. The ventilation device 102 includes several components as shown in Figure 1 and discussed below. In at least one example, the ventilation device 102 does not have every component that is shown in Figure 1.

The ventilation device 102 includes a support structure 108 which is a base or chassis that holds at least some of the other components in position. The support structure 108 may interface with the body of the wearer. In various examples, the support structure 108 may be a travel pillow (or neck pillow), a scarf, a vest, a jacket, a backpack, hat, helmet, or the like. In other examples, the support structure 108 may be a frame or chassis that is configured to be mounted to the wearer alone or in combination with another article, such as a travel pillow, scarf, vest, jacket, backpack, hat or helmet. For example, the support structure 108 may be a modular chassis that is designed to be housed in or on an article or element that is worn by the wearer. In a non-limiting example, the travel pillow may represent a modular element that is configured to be removably coupled to the chassis, such as by snapping onto the chassis. It is noted that the personal ventilation device 102 may be operable with or without an associated article or element worn by the wearer, which provides broad applicability for both crews and passengers in commercial vehicles as well as people outside of mass transit environments.

The ventilation device 102 also includes at least one duct 110, such as a duct assembly, that defines pathways for channeling airflow through the ventilation device 102. The duct(s) 110 may be tubes or pipes. The duct(s) 110 may be formed of light-weight materials, such as a thermoplastic. The duct(s) 110 are secured to the support structure 108 and held in place. Alternatively, the chassis or frame of the support structure 108 may be defined entirely or at least in part by ducts 110. The duct(s) 110 receive air from the air source 104. In an example, the air source 104 is a discrete source of conditioned air, such as an environmental control system on an aircraft, an air conditioning system, or the like. The discrete source may provide the air to the duct(s) 110 via one or more hoses 105 that mechanically connect to the ventilation device 102. In other examples, the air source 104 may be the ambient environment, such as the air within the cabin of a vehicle occupied by the wearer, and the ambient air may be supplied to the ventilation device 102 via one or more intake ports.

The ventilation device 102 also includes at least one nozzle 112 which is coupled to the at least one duct 110. The nozzle(s) 112 may be coupled to a respective end of the duct(s) 110. The nozzle(s) 112 may define one or more apertures, slots, or other openings therethrough to emit airflow from the duct(s) 110 and/or permit air to enter the duct(s) 110. The ventilation device 102 is arranged such that, when worn, the nozzles 112, 114 are disposed proximate to the face of the wearer. For example, the nozzle 112 may be within 6 inches (15.2 cm) of the wearer's chin, such as within 5 inches (12.7 cm) or even within 4 inches (10.2 cm) of the chin. According to the invention, the nozzles are configured to be disposed proximate to opposite sides of the midsagittal plane of the face of the wearer from one another, wherein the first nozzle is configured to direct airflow from a first duct segment across the face of the wearer to form a control volume for a breathing space of the wearer, and the second nozzle is configured to draw the airflow that is emitted from the first nozzle into a second duct to collect used air and enable a unidirectional flow direction across the midsagittal plane of the face of the wearer.

Optionally, the nozzle 112 may be oriented to direct the airflow in front of the wearer's face such that only a minority of the airflow, if any, impinges on the skin of the wearer. For example, the nozzle 112 may direct the majority of the airflow into the breathing space a few inches in front of the nose and mouth of the wearer, such as between 2 and 10 inches (5 and 25 cm) in front, or more specifically between 3 and 6 inches (7.6 and 15.2 cm) in front. That airflow forms the control volume to block the transfer of contaminants and pathogens across the control volume. The control volume represents a region in space occupied by continuous flowing sanitized (e.g., filtered, purified, UV radiated) air emitted from the personal ventilation device 102.

In one or more examples, the ventilation system 102 includes at least one filter 114. The filter(s) 114 extend into the air pathways defined by the duct(s) 110 to filter the air that is channeled through the duct(s) 110. The filter(s) 114 may be disposed within the duct(s) 110 or connected in series with the duct(s) 110. The filter(s) 114 may be HEPA filters or other filtering media for entraining pathogens and contaminants from the air.

The ventilation device 102 may also include at least one fan 116 that is powered to drive or force air to flow through the duct(s) 110. For example, a fan 116 may be secured to a duct 110 and configured to drive airflow through the duct 110 and out of the nozzle 112 at the end of the duct 110 to form the control volume. The fan 116 drives the airflow by the rotation of vanes or blades. The rotation is powered by a power source, such as an electrical energy storage device (EESD) 118 or the external power source 106. The EESD 118 is integrated on the ventilation device 102, and mounted to the support structure 108. The EESD 118 may include a battery pack, capacitors, or the like that can store electrical energy and release the energy to selectively power the fan(s) 116. The external power source 106 is not part of the ventilation device 102, and may include a vehicle electrical system, a building electrical system, a standalone battery pack, or the like. The ventilation device 102 may be adaptable for being powered by the external power source 106 by including a connector 120 that is electrically connected to the fan(s) 116 via a power cable 122. The connector 120 is configured to releasable connect to a connector 124 associated with the external power source 106, such as a plug on a power cord to supply electric current for selectively powering the fan(s) 116 and any other electrical components of the ventilation device 102.

The ventilation device 102 may include additional components not illustrated in Figure 1, such as a UV light source for emitting UV light into a flow pathway of air to neutralize pathogens and/or contaminants, an input/output device such as an On/Off switch and/or a display, and the like.

Figures 2 through 17B and the associated descriptions represent various examples of the personal, wearable ventilation device 102 shown in Figure 1.

Figure 2 is a perspective view of the ventilation device 102 according to an example being worn by a person. The ventilation device 102 in the illustrated example includes a travel pillow 150 (e.g., a neck pillow). The travel pillow 150 may define the support structure 108 shown in Figure 1. Alternatively, the travel pillow 150 may surround or be coupled to a frame or chassis that defines the support structure 108.

The travel pillow 150 may have a similar form factor as known travel pillows that wrap around the neck of the wearer. For example, the shape of the pillow 150 may resemble a "U" or a horseshoe. The travel pillow 150 may by filled with plush, soft, compressible fill material, such as foam. The other components of the ventilation device 102 may be disposed within an interior volume of the pillow 150 or mounted to an outer case 152 of the pillow 150. For example, the duct(s) 110 may be at least mostly within the interior volume and padded by the fill material to disguise the presence of the duct(s) 110. Optionally, the filter(s) 114, fan(s) 116, connector 120, and/or EESD 118, if present, may also be at least partially hidden within the travel pillow 150.

In the illustrated example, the ventilation device 102 includes a first nozzle 154 and a second nozzle 156, which represent the nozzle(s) 112 shown in Figure 1. The two nozzles 154, 156 are disposed along a top surface 158 of the outer case 152 and project beyond the top surface 158. The top surface 158 is based on the orientation in which the wearer is wearing the pillow 150, as the surface that faces towards the top of the wearer's head. The nozzles 154, 156 are also located proximate to a front 160 of the pillow 150. The front 160 is based on the direction that the wearer is facing when looking straight ahead, and the front 160 has an access passage 162 in the illustrated example. The access passage 162 enables modifying the diameter of the pillow 150. The nozzles 154, 156 are disposed on opposite sides of the access passage 162 and are positioned proximate to opposite sides of the wearer's face. For example, the nozzles 154, 156 are located on opposite sides of the midsagittal plane of the wearer. The first nozzle 154 is positioned proximate to the left side of the face, and the second nozzle 156 is proximate to the right side of the face. The nozzles 154, 156 may be positioned such that both are within a certain designated proximity distance of the wearer's chin, such as within 10 inches, within 8 inches, within 6 inches, or within 4 inches (25.4 cm, within 20.3 cm, within 15.2 cm, or within 10.2 cm) of the chin.

The nozzles 154, 156 each define one or more openings therethrough. In the illustrated example, both nozzles 154, 156 define an elongated slot 164 to shape the control volume 166. By forcing the airflow through an elongated, narrow slot 164, the airflow emitted from the nozzles 154, 156 may cause the control volume 166 to have a relatively flat shape, similar to a conventional shield (e.g., an air shield). For example, two of the three dimensions of the control volume 166 may be significantly greater (e.g., 3x, 5x, 10x, or the like) than the third dimension. The third dimension may represent a depth of the shield 166, and the first and second dimensions may represent the length and width of the shield 166 perpendicular to the depth dimension. Although not shown in Figure 2, the nozzles 154, 156 are coupled to the duct(s) 110 that are entirely or at least mostly concealed within the pillow 150.

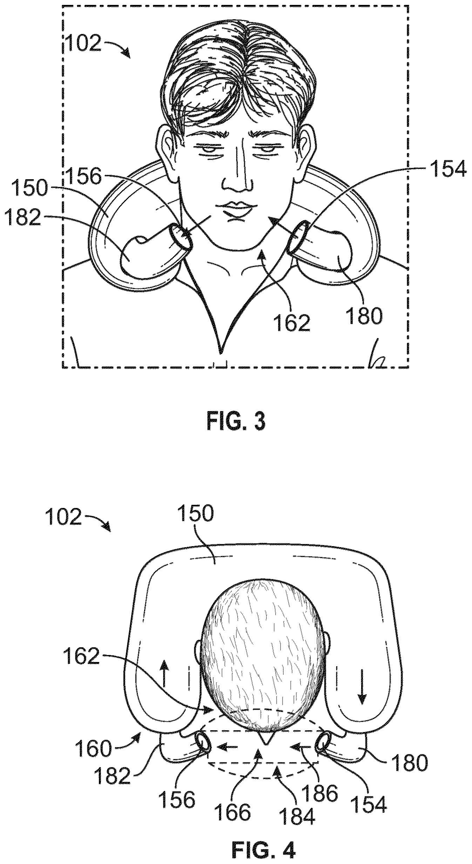

Figure 3 illustrates a front view of the ventilation device 102 according another example. Figure 4 illustrates a top-down view of the ventilation device 102 shown in Figure 3. The ventilation device 102 in Figures 3 and 4 includes the travel pillow 150 shown in Figure 2, but the nozzles 154, 156 are slightly different from the nozzles 154, 156 in Figure 2. For example, the first nozzle 154 in the illustrated example is disposed on a first end effector 180, and the second nozzle 156 is disposed on a second end effector 182. The end effectors 180, 182 project from the pillow 150 at or proximate to the front 160 on different sides of the access passage 162. The nozzles 154, 156 are disposed at distal ends of the end effectors 180, 182. Optionally, the end effectors 180, 182 may be flexible and/or adjustable to enable repositioning the nozzles 154, 156 to control the direction of airflow. For example, if the airflow is impinging the wearer's chin, mouth, and/or nose, the wearer may adjust one or both effectors 180, 182 to direct the airflow farther away from the wearer's face to reduce the amount of air that impinges on the skin. Optionally, the end effectors 180, 182 may be removable and/or replaceable. For example, the wearer can periodically remove the end effectors 180, 182 for cleaning/sanitizing or for substituting the end effectors 180, 182 with new ones.

Figures 3 and 4 show arrows that represent the direction of airflow. In the illustrated example, the first nozzle 154 emits airflow from the first end effector 180 across the face of the wearer to form the control volume 166 for a breathing space 184 of the wearer. For example, the control volume 166 may extend across the breathing space 184 and in front of at least a portion of the breathing space 184 to shield the breathing space 184, displacing ambient air by supplying a continuous stream of filtered air. In the illustrated example, the second nozzle 156 collects the air that is used to form the control volume 166 after the air flows across the midsagittal plane of the wearer.

This air is referred to as used air. The used air can have pathogens and/or contaminants received when in the shield 166. The used air can be collected for filtering within the ventilation device 102. By controlling one nozzle (e.g., 154) as an outgoing port and the other nozzle (e.g., 156) as an incoming port, the airflow has a single, unidirectional flow direction 186 across the face of the wearer, either right-to-left or left-to-right.

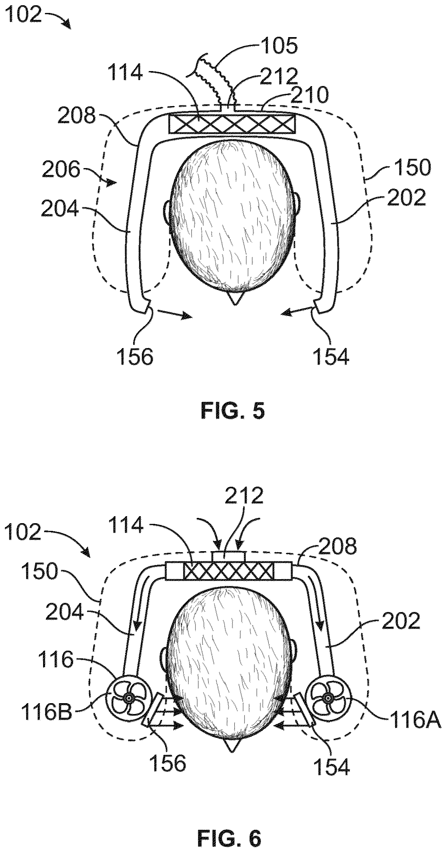

Figure 5 is a top-down cross-sectional view of a ventilation device 102 not configured for providing the unidirectional flow according to the invention, showing the internal components according to a first example. The ventilation device 102 includes the travel pillow 150 as the support structure (shown in phantom). The ventilation device 102 includes a first duct segment 202 and a second duct segment 204 both held by the support structure. For example, the duct segments 202, 204 are at least partially contained within an interior volume 206 of the pillow 150. The duct segments 202, 204 are fluidly coupled to each other within an integrated duct assembly 208. For example, the duct assembly 208 includes a manifold or common segment 210 that has an intake port 212. The first and second duct segments 202, 204 branch off in different directions from the manifold 210 and wrap at least partially around the neck of the wearer. The duct assembly 208 may extend along a curved path that surrounds a majority of the neck, such as at least 270 degrees around the neck. In the illustrated example, a filter 114, such as a HEPA filter, is disposed within the manifold 210. The intake port 212 is coupled to the hose 105 of the air source 104, which may represent an environmental control system of an aircraft. The air source 104 supplies air to the ventilation device 102 via the hose 105 and the intake port 212. The received air is filtered through the filter 114 before flowing through the first and second duct segments 202, 204.

The first nozzle 154 is mounted to first duct segment 202, and the second nozzle 156 is mounted to the second duct segment 204. In the illustrated example, both the first and second nozzles 154, 156 discharge the filtered air to form the control volume that protects the breathing space of the wearer. For example, the nozzles 154, 156 may both be positioned to direct the air across the face of the wearer, such as across the midsagittal plane. Unlike the example shown in Figures 2 and 3 and contrary to the invention, , the second nozzle 156 discharges airflow that contributes to the control volume, such that the shield is defined by air emitted from both the first and second nozzles 154, 156.

In the illustrated example, the ventilation device 102 lacks powered fans. For example, the air received through the hose 105 may be pressurized to establish sufficient airflow through the duct assembly. Plus, the airflow that forms the shield may be a relatively low rate or velocity. The nozzles 154, 156 may be formed to provide laminar fluid flow therethrough. The laminar airflow may be sufficient to block incoming aerosols without being sufficiently high to draw in contaminants from other areas into the breathing space.

Figure 6 is a top-down cross-sectional view of a ventilation device 102 not configured for providing the unidirectional flow according to the invention, showing the internal components according to a second example. The ventilation device 102 includes the travel pillow 150 as the support structure (shown in phantom). The ventilation device 102 differs from the ventilation device 102 shown in Figure 5 due to the lack of a direct mechanical connection to an air supply hose and the presence of fans 116 that actively drive the flow of air through the integrated duct assembly 208. The fans 116 include a first fan 116A associated with the first duct segment 202 and a second fan 116B associated with the second duct segment 204. In the illustrated example, the fans 116A, 116B are located at distal ends of the respective duct segments 202, 204 and the nozzles 154, 156 are mounted to the fans 116A, 116B. The fans 116A, 116B may be battery-powered from the EESD 118 (shown in Figure 1) or may be powered via the external power source 106 plug-in. Both fans 116A, 116B are rotated in designated directions to create negative pressure that draws air from the ambient environment into the intake port 212 and through the filter 114. The filtered air is then partitioned into two flow streams through the duct segments 202, 204 before being discharged from the nozzles 154, 156 to form the control volume. Both flow streams contribute to the formation of the control volume in Figure 6, similar to Figure 5.

One benefit of the illustrated example is the avoidance of being tethered to an external air supply via a hose, which enables the ventilation device 102 to be more mobile and portable. Furthermore, if the fans 116A, 116B are powered via the integrated EESD 118, the ventilation device 102 can also avoid the use of external power connections, rendering the device 102 entirely self-contained and fully portable. The wearer could not only wear the device 102 when walking and moving about, but also operate the device 102 to provide the control volume while walking. In an aircraft example, the wearer may be a passenger that can use the device 102 to provide the control volume while walking through the departing airport, boarding the aircraft, seated during the flight, exiting the aircraft, and walking through the destination airport.

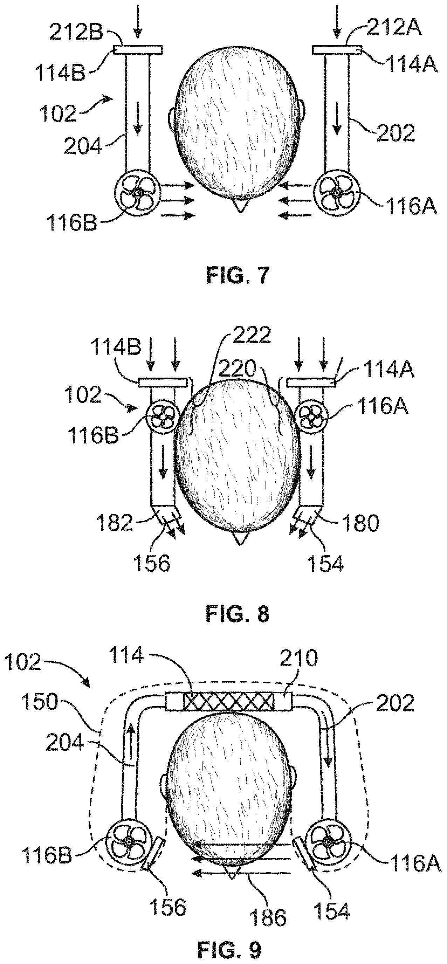

Figure 7 is a top-down cross-sectional view of a ventilation device 102 not configured for providing the unidirectional flow according to the invention, showing the internal components according to a third example. The ventilation device 102 may include the travel pillow 150 (not shown) as the support structure, or may lack the travel pillow. The ventilation device 102 is similar to the ventilation device 102 shown in Figure 6 except that the first and second duct segments 202, 204 are not integrated or fluidly coupled. The first duct segment 202 is fluidly discrete and disconnected (e.g., mechanically separate) from the second duct segment 204, although both are disposed within the pillow. The first duct segment 202 includes a first filter 114A located at a first intake port 212A. The fan 116A draws ambient air into the first intake port 212A through the first filter 114A into the first duct segment 202. The second duct segment 204 includes a second filter 114B located at a second intake port 212B. The fan 116B draws ambient air into the second intake port 212B through the second filter 114B into the second duct segment 204. The air streams are discharged as described above with reference to Figure 6. The filters 114A, 114B may be HEPA filters. The arrangement shown in Figure 6 may simplify the construction and/or free space at the rear of the pillow 150 behind the neck of the wearer. The lack of ductwork behind the neck could potentially provide more comfort to the wearer.

Figure 8 is a top-down cross-sectional view of a ventilation device 102 not configured for providing the unidirectional flow according to the invention, showing the internal components according to a fourth example. The ventilation device 102 is similar to the ventilation device 102 shown in Figure 7 except for the placement of the fans 116A, 116B. In the illustrated example, the fans 116A, 116B are disposed at or proximate to the corresponding filters 114A, 114B. For example, the first fan 116A and the first filter 114A may be integrated to define a first fan module 220. Likewise, the second fan 116B and the second filter 114B may define a second fan module 222. The fans 116A, 116B are disposed proximate to the rear of the ventilation device 102, such that the fans 116A, 116B are spaced apart from the nozzles 154, 156. The nozzles 154, 156 may be mounted to respective first and second adjustable end effectors 180, 182, as shown in Figure 3, to enable selective orientations of the nozzles 154, 156.

Figure 9 is a top-down cross-sectional view of the ventilation device 102 configured for providing the unidirectional flow according to the invention and showing the internal components according to a fifth example. The ventilation device 102 includes the travel pillow 150 (shown in phantom) as the support structure. In other examples, the ventilation device 102 may lack the travel pillow 150, instead including a different integrated wearable article or element, or even just having a modular chassis or frame without an integrated wearable article or element. The ventilation device 102 is similar to the example shown in Figure 6 except that the first and second fans 116A, 116B are operated to provide the unidirectional flow direction 186 as shown in Figure 4. For example, the first duct segment 202 is fluidly coupled to the second duct segment 204 via the manifold 210, which has the filter 114. The first fan 116A is controlled to rotate in a specific direction that discharges airflow from the first duct segment 202 out of the first nozzle 154 to form the control volume. The second fan 116B associated with the second duct segment 204 is controlled to rotate in a specific direction that draws ambient air through the second nozzle 156 into the second duct segment 204. At least some of the air that is drawn through the second nozzle 156 is the air of the shield that was discharged from the first nozzle 154. The result is that the airflow that forms the shield travels in the flow direction 186 across the face of the wearer from the first nozzle 154 to the second nozzle 156. The air in the second duct segment 204 is driven through the filter 114 before being discharged through the first nozzle 154 to repeat the cycle. In the illustrated example, the second nozzle 156 functions as an intake port. The ventilation device 102 optionally may have no other intake ports or indeed may have at least one other intake port. The air in the illustrated example is continuously recycled and filtered. Optionally, the fans 116A, 116B in Figure 9 can be operated such that the direction of flow is opposite the direction 186 shown.

In an alternative example, the ventilation device 102 shown in Figure 1 may have only one fan, such as only the second fan 116B. The second fan 116B may be powered to provide sufficient flow that the filtered air downstream of the filter 114 is discharged from the first nozzle 154 with sufficient velocity and/or flow rate to form an effective shield.

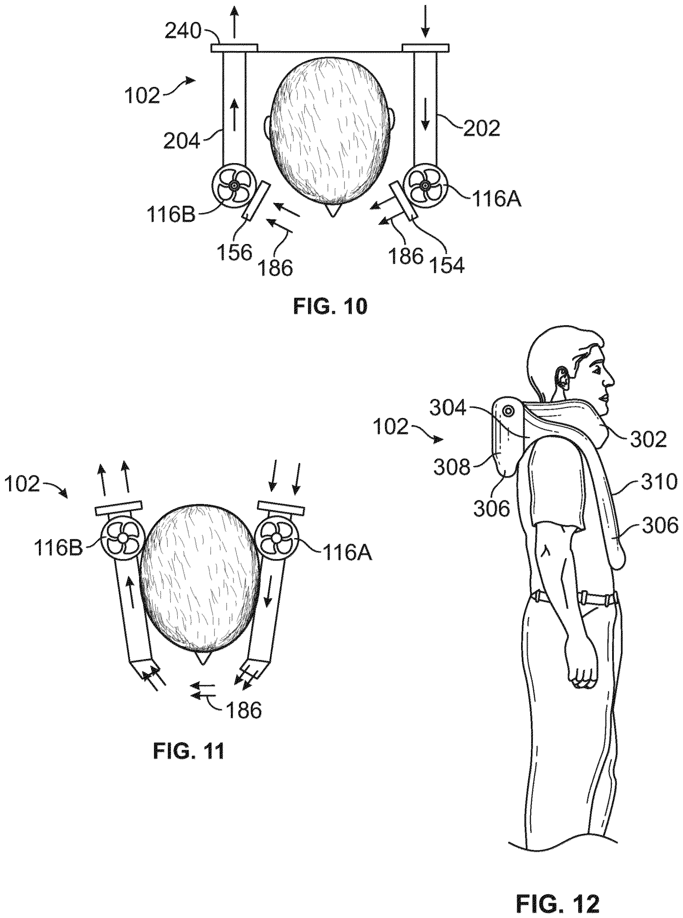

Figure 10 is a top-down cross-sectional view of the ventilation device 102 configured for providing the unidirectional flow according to the invention and showing the internal components according to a sixth example. The ventilation device 102 is arranged that same as the ventilation device 102 in Figure 7, except that the fans 116A, 116B are controlled to direct air in different directions in order to provide the unidirectional flow direction 186 as required by the invention and shown in Figure 9. For example, the first fan 116A pushes air from the first duct segment 202 out of the first nozzle 154, and the second fan 116B pulls air into the second duct segment 204 through the second nozzle 156. The air in the second duct segment 204 is discharged into the ambient environment from an exhaust port 240 of the ventilation device 102.

Figure 11 is a top-down cross-sectional view of the ventilation device 102 configured for providing the unidirectional flow according to the invention, showing the internal components according to a seventh example. The ventilation device 102 is arranged that same as the ventilation device 102 in Figure 8, except that the fans 116A, 116B are controlled to direct air in different directions in order to provide the unidirectional flow direction 186 as required by the invention and shown in Figures 9 and 10. The air flows through the device 102 as described above with respect to Figure 10.

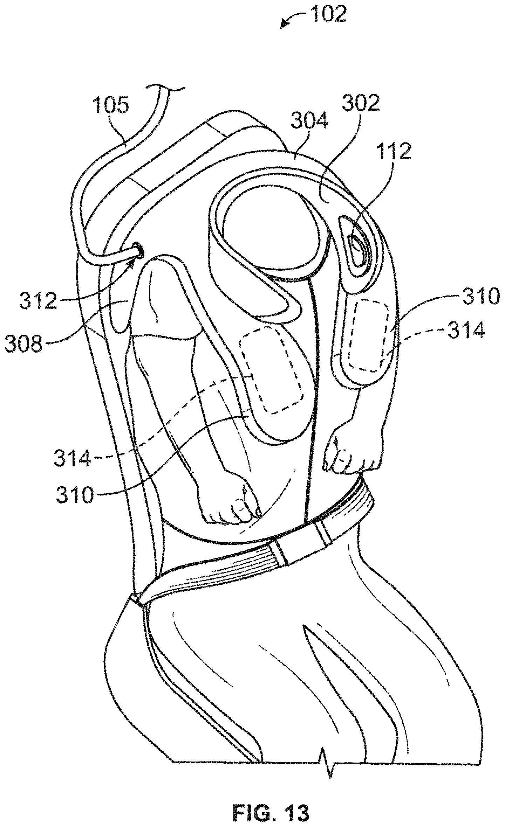

Figure 12 is a side elevation view of the ventilation device 102 according to another example being worn by a person. Figure 13 is a perspective view of the ventilation device 102 shown in Figure 12. In the illustrated example, the support structure is a collar 302 of a vest 304. The vest 304 includes fabric panels 306 that lay on the shoulders, chest, and/or back of the wearer. The collar 302 extends upward from the panels 306 and curves to surround at least a majority of the neck of the wearer, similar to a conventional vest or jacket collar. The duct(s) 110 (shown in Figure 1) and the nozzle(s) 112 may be integrated into the collar 302. Other components of the ventilation device 102 may be mounted to other portions of the vest 304. For example, fans and filters may be integrated into a back panel 308 or pack of the vest 304 that aligns with the wearer's upper back. In addition, one or more rechargeable battery packs 314, control devices, and/or input devices may be integrated into one or both front panels 310 of the vest 304 that align with the upper chest of the wearer. The back panel 308 may include one or more ports and/or vents. For example, an intake port 312 may releasably couple to the hose 105 of a vehicle air supply.

Although the form factor is changed, the ventilation device 102 shown in Figures 12 and 13 may operate as described above with respect to the examples integrated into the travel pillow 150, shown in Figures 2 through 11.

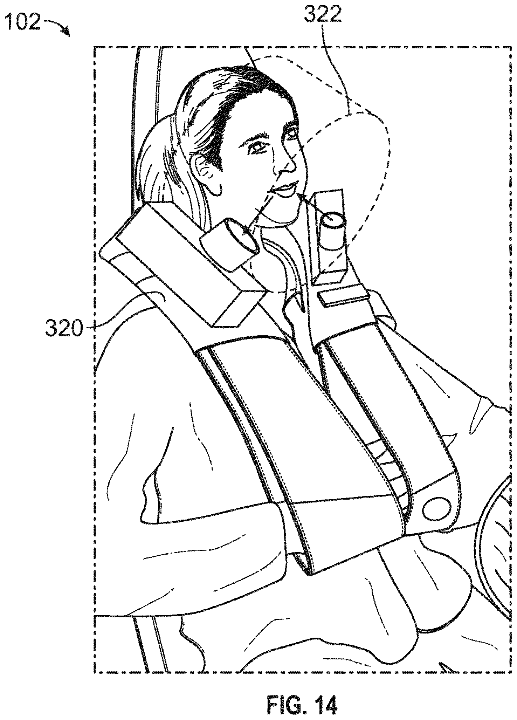

Figure 14 is a perspective view of a person wearing a vest 320 that incorporates the ventilation device 102 according to an example. The ventilation device 102 in Figure 14 is similar to the ventilation device 102 in Figures 12 and 13. Figure 14 shows a control volume 322 generated by the ventilation device 102. The control volume 322 protects the personal breathing space of the person wearing the vest 320 from airborne pathogens and/or contaminants. In another example, the ventilation device 102 may be incorporated into a jacket or another article of clothing other than a vest.

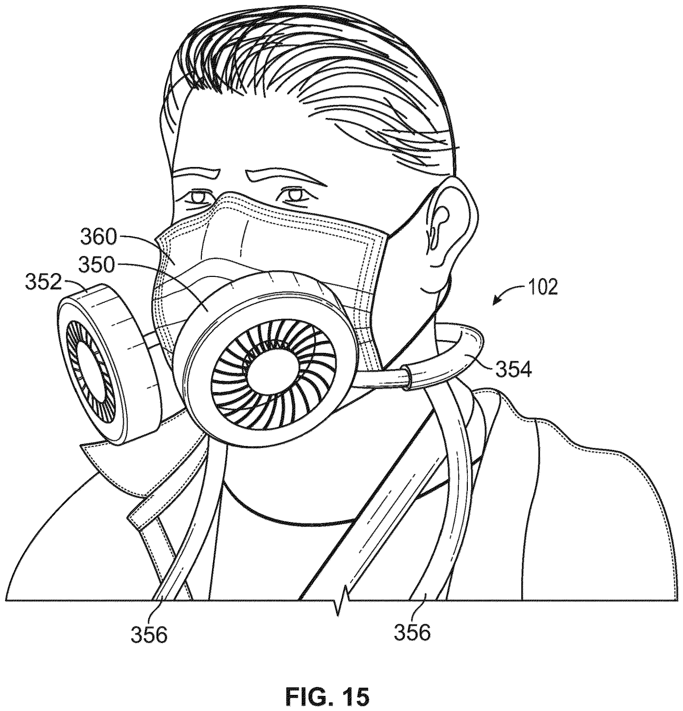

Figure 15 is a perspective view of the ventilation device 102 according to another example being worn by a person. The ventilation device 102 in Figure 15 is more exposed than the pillow and vest examples. The ventilation device 102 includes first and second fan modules 350, 352. Each fan module 350, 352 may include a power fan and a nozzle for discharging air and/or receiving air. The fan modules 350, 352 may also include filters and/or filter assemblies. The fan modules 350, 352 are coupled to a chassis 354 that wraps around the back of the wearer's neck and extends from the module 350 to the module 352. The chassis 354 may also hold the EESD 118 (shown in Figure 1). The EESD 118 may be spaced apart from the fan modules 350, 352, such as located at the back of the wearer's head. The EESD 118 may be connected to the fan modules 350, 352 via concealed electrical power cables that are routed through the chassis 354. The fan modules 350, 352 and the chassis 354 may be supported by a frame 356 which may abut against a chest of the wearer and/or the shoulders of the wearer. The frame 356 and the chassis 354 may define or represent the support structure, which together hold the fan modules 350, 352 in a fixed position relative to the wearer.

In an alternative example, the chassis 354 shown in Figure 15 may be an integrated duct assembly. For example, the chassis 354 may be defined by hollow ducts, such as first and second duct segments that route air to and/or from the fan modules 350, 352. The duct assembly of the chassis 354 may be similar to the duct assembly shown in Figures 5, 6, and 9.

In Figure 15, the wearer is also wearing a personal facemask 360 that covers the nose and mouth. Because the fan modules 350, 352 are spaced apart from the wearer, such as a few inches in front of, below, and/or to the lateral sides of the wearer's face, the ventilation device 102 does not interfere with the wearing of the other facemask 360.

For example, the person can wear both the ventilation device 102 and a discrete personal facemask at the same time without experiencing added discomfort.

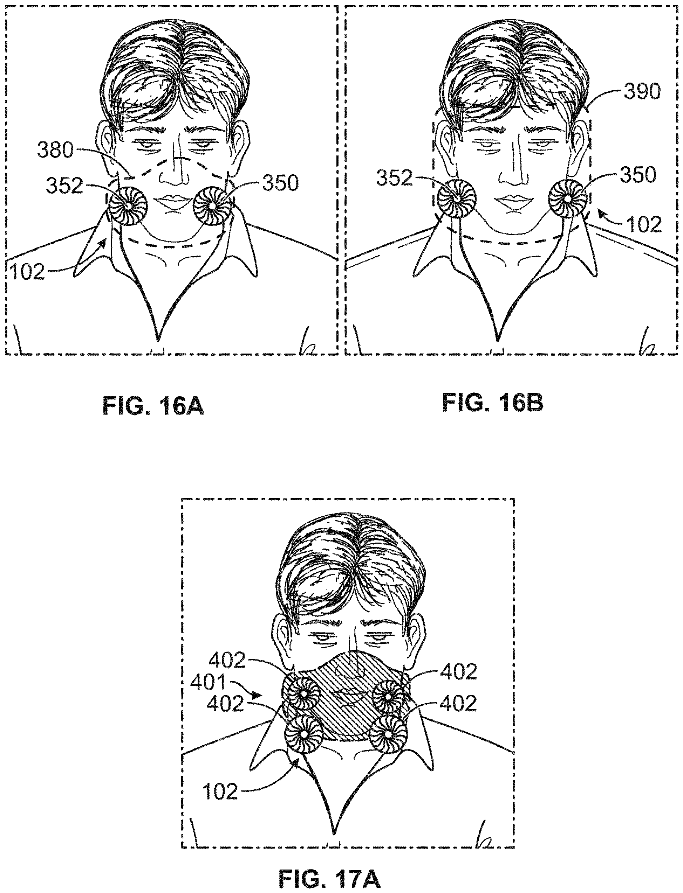

Figure 16A illustrates the fan modules 350, 352 of the ventilation device 102 shown in Figure 15 mounted to a half facemask 380. In an example, the support structure of the ventilation device 102 may be configured to removably mount to the half facemask 380 to form a combined unit. For example, the ventilation device 102 may include magnets, fasteners, latches, friction-fit features, and/or the like to enable selective coupling to a discrete mask, such as the facemask 380.

Figure 16B illustrates the fan modules 350, 352 of the ventilation device 102 shown in Figure 15 mounted to a full facemask 390. Optionally, the magnets, fasteners, latches, friction-fit features, and/or the like on the support structure may also enable selective coupling to the full facemask 390. The full facemask 390 may include a rigid transparent material, such as a polymer, through which the wearer sees.

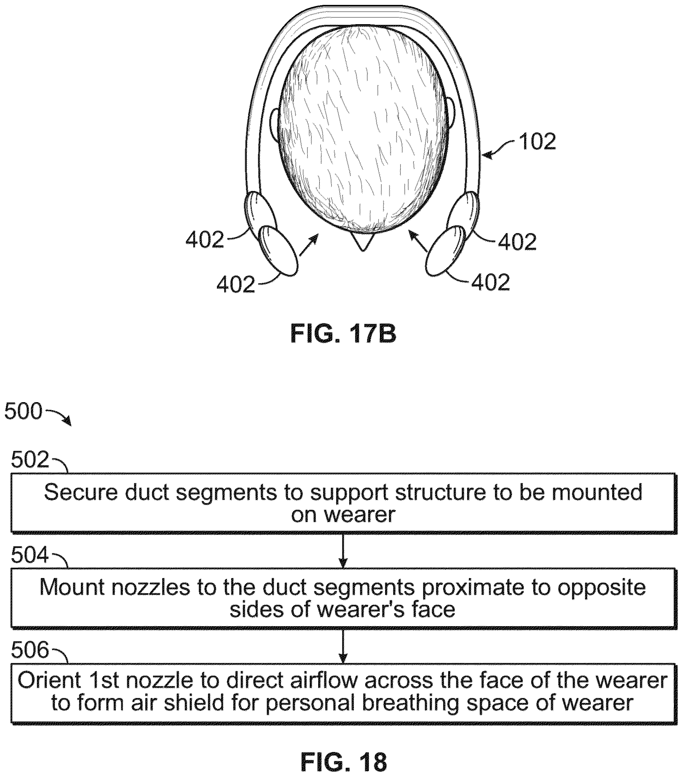

Figure 17A is a front elevation view of the ventilation device 102 according to another example including an array 401 of at least three fan modules 402. Figure 17B is a top-down view of the ventilation device 102 shown in Figure 17A. The device 102 has four modules 402 in the illustrated example, with two modules 402 on each side of the wearer's face. By including multiple nozzles on the same side of the face, the fan modules 402 can form a larger control volume, such as a taller control volume that ensure protection of the mouth and nose. The individual nozzles and/or fan modules 402 can be adjusted to aim the discharged airflow at slightly different locations relative to the wearer's face.

Figure 18 illustrates a flow chart 500 of a method for delivering sanitized air to a personal breathing space according to an example of the present invention.

The method includes, at 502, securing first and second duct segments to a support structure that is configured to be mounted on a wearer of the personal ventilation device. At 504, a first nozzle is mounted to the first duct segment, and a second nozzle is mounted to the second duct segment. The first and second nozzles are mounted proximate to opposite sides of a face of the wearer. For example, the duct segments may at least partially surround the neck of the wearer, and the nozzles may be mounted to distal ends of the duct segments that are spaced apart along opposite sides of a lateral centerline of the ventilation device 126. For example, when worn, the nozzles are disposed along opposite sides of the wearer's midsagittal plane within a designated proximity distance of the wearer's chin. At 506, the first nozzle is oriented to direct airflow from the first duct segment across the face of the wearer to form a control volume for the personal breathing space of the wearer. According to the invention the second nozzle draws the airflow that is emitted from the first nozzle into the second duct to collect used air and enable a unidirectional flow direction across the midsagittal plane of the face of the wearer.

As described herein, examples of the subject disclosure provide a ventilation device and methods for delivering sanitized (e.g., filtered, conditioned, treated, disinfected, decontaminated, UV radiated, etc.) air into a personal breathing space to block the spread of pathogens. According to the invention, the ventilation device is configured for creating a unidirectional flow direction across the midsagittal plane of the face of the wearer.

In at least one example, one of the nozzles at the end of the ducts direct the airflow toward the mouth/ nose of the user. The ventilation device may include at least one fan that is controlled to move the air across the face. The fans may use one nozzle as an intake port to provide a unidirectional airflow cycle. In one or more examples, the ventilation device is embedded into a travel pillow which combines fresh air with pillow head support. The nozzles can be moveable, to allow the user to direct the air so that it is comfortable and properly directed toward the mouth and nose. The nozzle can also be a slit that can create an "air curtain" that is directed across the face. There can be multiple nozzles, positioned around the wearable device to create a sort of helmet airflow, or a broad curtain of air around a majority of the face and head, in order to create a unidirectional flow direction across the midsagittal plane of the of the wearer.

As used herein, a structure, limitation, or element that is "configured to" perform a task or operation is particularly structurally formed, constructed, or adapted in a manner corresponding to the task or operation. For purposes of clarity and the avoidance of doubt, an object that is merely capable of being modified to perform the task or operation is not "configured to" perform the task or operation as used herein. It is to be understood that the above description is intended to be illustrative, and not restrictive. The scope of the invention is defined in the claims. The examples comprising at least the features of the claims are examples of the invention.

While the dimensions and types of materials described herein are intended to define the parameters of the various examples of the disclosure, the examples are by no means limiting and are exemplary examples.

In the appended claims and the detailed description herein, the terms "including" and "containing" are used as the plain-English equivalents of the term "comprising" and the term "in which" is used as the plain-English equivalents of the term "wherein." Moreover, the terms "first," "second," and "third," etc. are used merely as labels, and are not intended to impose numerical requirements on their objects.

This written description uses examples to disclose the various examples of the invention, including the best mode, and also to enable any person skilled in the art to practice the various examples of the invention, including making and using any devices or systems and performing any incorporated methods. The patentable scope of the various examples of the invention is defined by the claims.

## Claims

1. A personal ventilation device (102) comprising:
a first duct segment (202) and a second duct segment (204) both held by a support structure that is configured to be mounted on a wearer of the personal ventilation device; and
a first nozzle (154) mounted to the first duct segment and a second nozzle (156) mounted to the second duct segment, wherein the first and second nozzles are configured to be disposed proximate to opposite sides of the midsagittal plane of the face of the wearer from one another, and wherein the device is configured so that the first nozzle directs airflow from the first duct segment across the face of the wearer to form a control volume for a breathing space of the wearer, and the second nozzle draws the airflow that is emitted from the first nozzle into the second duct to collect used air and enable a unidirectional flow direction across the midsagittal plane of the face of the wearer.

2. The personal ventilation device of claim 1, wherein the first duct segment is fluidly coupled to the second duct segment within an integrated duct assembly and an air filter (114) is disposed within the integrated duct assembly to filter the airflow that forms the control volume.

3. The personal ventilation device of any of claims 1-2, wherein a first air filter is disposed within the first duct segment to filter the airflow that forms the control volume.

4. The personal ventilation device of claim 3, wherein the first and second duct segments are fluidly discrete and disconnected, and a second air filter is disposed within the second duct segment to filter airflow through the second duct segment.

5. The personal ventilation device of any of claims 1-4, further comprising at least one intake port to supply one or more of ambient air or conditioned air into at least the first air duct.

6. The personal ventilation device of any of claims 1-5, further comprising a fan (116) controlled to drive the airflow that forms the control volume through the first nozzle

7. The personal ventilation device of claim 6, further comprising at least one of:
(a) an electrical energy storage device mounted to the support structure and electrically connected to the fan, or
(b) an electrical connector electrically connected to the fan and configured to releasably connect to a power cable of an external power source for powering the fan.

8. The personal ventilation device of claim 6 or claim 7, wherein the fan is a first fan (116A) associated with the first duct segment, and the personal ventilation device further comprises a second fan (116B) associated with the second duct segment, wherein the second fan is controlled to draw the airflow that forms the control volume into the second duct segment to provide the unidirectional flow direction across the face of the wearer.

9. The personal ventilation device of any of claims 1-8, wherein the first and second nozzles are disposed on respective first and second replaceable end effectors.

10. The personal ventilation device of any of claims 1-9, wherein support structure is sized and shaped for mounting to at least one of a neck, chest, or shoulders of the wearer.

11. The personal ventilation device of any of claims 1-10, wherein the support structure is a travel pillow (150) that wraps around at least a majority of a neck of the wearer and the first and second duct segments are at least partially contained within an interior volume of the travel pillow, and
optionally, wherein the travel pillow includes a foam material within the interior volume.

12. The personal ventilation device of any of claims 1-11, wherein the support structure is a collar of a vest, the vest including fabric panels that lay on one or more of shoulders, chest, or back of the wearer.

13. The personal ventilation device of any of claims 1-12, wherein the support structure includes an adjustable frame that holds the first and second duct segments in a fixed position relative to the wearer.

14. The personal ventilation device of any of claims 1-13, wherein the personal ventilation device is self-contained and portable such that wearer can be mobile while wearing the personal ventilation device.

15. A method (500) for delivering sanitized air to a personal breathing space by a personal ventilation device (102) of any of previous claims, the method comprising:
securing (502) a first duct segment and a second duct segment to a support structure that is configured to be mounted on a wearer of the personal ventilation device;
mounting (504) a first nozzle to the first duct segment and a second nozzle to the second duct segment, wherein the first and second nozzles are mounted proximate to opposite sides of the midsagittal plane of a face of the wearer;
orienting (506) the first nozzle to direct airflow from the first duct segment across the face of the wearer to form a control volume for the personal breathing space of the wearer; and
orienting the second nozzle to draw the airflow from the first duct segment into the second duct segment to collect used air and enable a unidirectional flow direction across the midsagittal plane of the face of the wearer.

## Patentansprüche

1. Persönliche Lüftungsvorrichtung (102), umfassend:
ein erstes Kanalsegment (202) und ein zweites Kanalsegment (204), die beide von einer Trägerstruktur gehalten werden, die ausgestaltet ist, um an einem Benutzer der persönlichen Lüftungsvorrichtung angebracht zu werden; und
eine erste Düse (154), die an dem ersten Kanalsegment angebracht ist, und eine zweite Düse (156), die an dem zweiten Kanalsegment angebracht ist, wobei die erste und die zweite Düse ausgestaltet sind, um nahe an gegenüber liegenden Seiten der Mittelsagittalebene des Gesichts des Benutzers zueinander angeordnet zu werden, und wobei die Vorrichtung so ausgestaltet ist, dass die erste Düse Luftströmung aus dem ersten Kanalsegment über das Gesicht des Benutzers lenkt, um ein Kontrollvolumen für einen Atemraum des Benutzers zu bilden, und die zweite Düse die Luftströmung, die von der ersten Düse emittiert wird, in den zweiten Kanal zieht, um verbrauchte Luft aufzufangen und eine unidirektionale Strömungsrichtung über der Mittelsagittalebene des Gesichts des Benutzers zu ermöglichen.

2. Persönliche Lüftungsvorrichtung nach Anspruch 1, wobei das erste Kanalsegment fließtechnisch innerhalb einer integrierten Kanalbaugruppe an das zweite Kanalsegment gekoppelt ist und innerhalb der integrierten Kanalbaugruppe ein Luftfilter (114) angeordnet ist, um die Luftströmung zu filtern, die das Kontrollvolumen bildet.

3. Persönliche Lüftungsvorrichtung nach einem der Ansprüche 1-2, wobei ein erster Luftfilter innerhalb des ersten Kanalsegments angeordnet ist, um die Luftströmung zu filtern, die das Kontrollvolumen bildet.

4. Persönliche Lüftungsvorrichtung nach Anspruch 3, wobei das erste und das zweite Kanalsegment fließtechnisch diskret und nicht-verbunden sind, und ein zweiter Luftfilter innerhalb des zweiten Kanalsegments angeordnet ist, um die Luftströmung durch das zweite Kanalsegment hindurch zu filtern.

5. Persönliche Lüftungsvorrichtung nach einem der Ansprüche 1-4, des Weiteren umfassend mindestens einen Ansaugstutzen, um in mindestens den ersten Luftkanal ein oder mehrere von Umgebungsluft oder konditionierter Luft zuzuführen.

6. Persönliche Lüftungsvorrichtung nach einem der Ansprüche 1-5, des Weiteren umfassend ein Gebläse (116), das gesteuert wird, um die Luftströmung, die das Kontrollvolumen bildet, durch die erste Düse zu treiben.

7. Persönliche Lüftungsvorrichtung nach Anspruch 6, des Weiteren umfassend mindestens eines von:
(a) einer elektrischen Energiespeichervorrichtung, die an der Trägerstruktur angebracht ist und elektrisch mit dem Gebläse verbunden ist, oder
(b) einem elektrischen Verbinder, der elektrisch mit dem Gebläse verbunden ist und ausgestaltet ist, um abnehmbar mit einem Stromkabel einer externen Stromquelle verbunden zu werden, um das Gebläse mit Strom zu versorgen.

8. Persönliche Lüftungsvorrichtung nach Anspruch 6 oder Anspruch 7, wobei das Gebläse ein erstes Gebläse (116A) ist, das zu dem ersten Kanalsegment gehört, und die persönliche Lüftungsvorrichtung des Weiteren ein zweites Gebläse (116B) umfasst, das zu dem zweiten Kanalsegment gehört, wobei das zweite Gebläse so gesteuert wird, dass es die Luftströmung, die das Kontrollvolumen bildet, in das zweite Kanalsegment zieht, um die unidirektionale Strömungsrichtung über dem Gesicht des Benutzers bereitzustellen.

9. Persönliche Lüftungsvorrichtung nach einem der Ansprüche 1-8, wobei die erste und die zweite Düse auf ersten beziehungsweise zweiten auswechselbaren Endeffektoren angeordnet sind.

10. Persönliche Lüftungsvorrichtung nach einem der Ansprüche 1-9, wobei die Trägerstruktur so bemessen und geformt ist, dass sie an mindestens einem von Hals bzw. Nacken, Brustkorb oder Schultern des Benutzers angebracht werden kann.

11. Persönliche Lüftungsvorrichtung nach einem der Ansprüche 1-10, wobei die Trägerstruktur ein Reisekissen (150) ist, das um mindestens einen größeren Teil von Hals bzw. Nacken des Benutzers geführt wird, und das erste und das zweite Kanalsegment mindestens teilweise in einem Innenvolumen des Reisekissens enthalten sind, und
wobei das Reisekissen gegebenenfalls ein Schaummaterial innerhalb des Innenvolumens einschließt.

12. Persönliche Lüftungsvorrichtung nach einem der Ansprüche 1-11, wobei die Trägerstruktur ein Kragen einer Weste ist, wobei die Weste Stoffabschnitte einschließt, die auf einem oder mehreren von Schultern, Brustkorb oder Rücken des Benutzers liegen.

13. Persönliche Lüftungsvorrichtung nach einem der Ansprüche 1-12, wobei die Trägerstruktur einen einstellbaren Rahmen einschließt, der das erste und das zweite Kanalsegment in Bezug zu dem Benutzer in einer festen Position hält.

14. Persönliche Lüftungsvorrichtung nach einem der Ansprüche 1-13, wobei die persönliche Lüftungsvorrichtung autark und tragbar ist, so dass der Benutzer mobil sein kann, während die persönliche Lüftungsvorrichtung getragen wird.

15. Verfahren (500) zum Abgeben von keimfreier Luft an einen persönlichen Atemraum mittels einer persönlichen Lüftungsvorrichtung (102) gemäß einem der vorhergehenden Ansprüche, wobei das Verfahren umfasst:
Sichern (502) eines ersten Kanalsegments und eines zweiten Kanalsegments an einer Trägerstruktur, die ausgestaltet ist, um an einem Benutzer der persönlichen Lüftungsvorrichtung angebracht zu werden;
Anbringen (504) einer ersten Düse an dem ersten Kanalsegment und einer zweiten Düse an dem zweiten Kanalsegment, wobei die erste und die zweite Düse nahe an gegenüber liegenden Seiten der Mittelsagittalebene eines Gesichts des Benutzers angebracht sind;
Orientieren (506) der ersten Düse, um Luftströmung von dem ersten Kanalsegment über das Gesicht des Benutzers zu führen, um ein Kontrollvolumen für den persönlichen Atemraum des Benutzers zu bilden; und
Orientieren der zweiten Düse, um die Luftströmung von dem ersten Kanalsegment in das zweite Kanalsegment zu ziehen, um verbrauchte Luft aufzufangen und eine unidirektionale Strömungsrichtung über der Mittelsagittalebene des Gesichts des Benutzers zu ermöglichen.

## Revendications

1. Dispositif de ventilation personnel (102) comprenant :
un premier segment de conduit (202) et un second segment de conduit (204) tous deux maintenus par une structure de support qui est configurée pour être montée sur un porteur du dispositif de ventilation personnel ; et
une première buse (154) montée sur le premier segment de conduit et une seconde buse (156) montée sur le second segment de conduit, les première et seconde buses étant configurées pour être disposées à proximité des côtés opposés du plan médiosagittal du visage du porteur et le dispositif étant configuré de sorte que la première buse dirige le flux d'air du premier segment de conduit à travers le visage du porteur pour former un volume de commande pour un espace respiratoire du porteur, et que la seconde buse aspire le flux d'air émis par la première buse dans le second conduit pour collecter l'air usagé et permettre un écoulement unidirectionnel dans le plan médiosagittal du visage de l'utilisateur.

2. Dispositif de ventilation personnel selon la revendication 1, le premier segment de conduit étant couplé fluidiquement au second segment de conduit dans un ensemble de conduit intégré et un filtre à air (114) étant disposé dans l'ensemble de conduit intégré pour filtrer le flux d'air qui forme le volume de commande.

3. Dispositif de ventilation personnel selon l'une quelconque des revendications 1 et 2, un premier filtre à air étant disposé à l'intérieur du premier segment de conduit pour filtrer le flux d'air qui forme le volume de commande.

4. Dispositif de ventilation personnelle selon la revendication 3, les premier et second segments de conduit étant fluidiquement discrets et déconnectés, et un second filtre à air étant disposé dans le second segment de conduit pour filtrer le flux d'air à travers le second segment de conduit.

5. Dispositif de ventilation personnel selon l'une quelconque des revendications 1 à 4, comprenant en outre au moins un orifice d'admission pour fournir un ou plusieurs éléments parmi l'air ambiant ou l'air conditionné dans au moins le premier conduit d'air.

6. Dispositif de ventilation personnelle selon l'une quelconque des revendications 1 à 5, comprenant en outre un ventilateur (116) commandé pour entraîner le flux d'air qui forme le volume de commande à travers la première buse.

7. Dispositif de ventilation personnel selon la revendication 6, comprenant en outre au moins l'un parmi :
(a) un dispositif de stockage d'énergie électrique monté sur la structure de support et connecté électriquement au ventilateur, ou
(b) un connecteur électrique connecté électriquement au ventilateur et configuré pour se connecter de manière amovible à un câble d'alimentation d'une source d'énergie externe pour alimenter le ventilateur.

8. Dispositif de ventilation personnel selon la revendication 6 ou selon la revendication 7, le ventilateur étant un premier ventilateur (116A) associé au premier segment de conduit, et le dispositif de ventilation personnel comprenant en outre un second ventilateur (116B) associé au second segment de conduit, le second ventilateur étant commandé pour aspirer le flux d'air qui forme le volume de commande dans le second segment de conduit pour fournir la direction d'écoulement unidirectionnelle à travers le visage du porteur.

9. Dispositif de ventilation personnel selon l'une quelconque des revendications 1 à 8, les première et seconde buses étant disposées sur des premier et second effecteurs terminaux remplaçables respectifs.

10. Dispositif de ventilation personnel selon l'une quelconque des revendications 1 à 9, la structure de support étant dimensionnée et formée pour être montée sur au moins l'un des éléments suivants : le cou, la poitrine ou les épaules de l'utilisateur.

11. Dispositif de ventilation personnel selon l'une quelconque des revendications 1 à 10, la structure de support étant un oreiller de voyage (150) qui s'enroule autour d'au moins une majorité du cou de l'utilisateur et les premier et second segments de conduit étant au moins partiellement contenus dans un volume intérieur de l'oreiller de voyage, et
éventuellement, l'oreiller de voyage comprenant un matériau en mousse dans le volume intérieur.

12. Dispositif de ventilation personnel selon l'une quelconque des revendications 1 à 11, la structure de support étant un col d'un gilet, le gilet comprenant des panneaux de tissu qui s'étendent sur un ou plusieurs des épaules, de la poitrine ou du dos de l'utilisateur.

13. Dispositif de ventilation personnel selon l'une quelconque des revendications 1 à 12, la structure de support comprenant un cadre réglable qui maintient les premier et second segments de conduit dans une position fixe par rapport à l'utilisateur.

14. Dispositif de ventilation personnel selon l'une quelconque des revendications 1 à 13, le dispositif de ventilation personnel étant autonome et portable de sorte que l'utilisateur peut être mobile tout en portant le dispositif de ventilation personnel.

15. Procédé (500) d'acheminement d'air assaini dans un espace respiratoire personnel par un dispositif de ventilation personnel (102) selon l'une quelconque des revendications précédentes, le procédé comprenant :
la fixation (502) d'un premier segment de conduit et d'un second segment de conduit à une structure de support qui est configurée pour être montée sur un porteur du dispositif de ventilation personnelle ;
le montage (504) d'une première buse sur le premier segment de conduit et d'une seconde buse sur le second segment de conduit, les première et seconde buses étant montées à proximité des côtés opposés du plan médiosagittal d'un visage du porteur ;
l'orientation (506) de la première buse pour diriger le flux d'air du premier segment de conduit à travers le visage du porteur afin de former un volume de commande pour l'espace respiratoire personnel du porteur ; et
l'orientation de la seconde buse pour aspirer le flux d'air du premier segment de conduit dans le second segment de conduit pour collecter l'air utilisé et permettre une direction de flux unidirectionnelle à travers le plan médiosagittal du visage de l'utilisateur.
